# FASCICULE DE BREVET EUROPEEN

(11) **EP 3 433 172 B1**
(45) Date de publication et mention de la délivrance du brevet: **11.09.2019**
(21) Numéro de dépôt: 17732498.5
(22) Date de dépôt: 23.05.2017
(51) Int. Cl.: B64G 1/50, B64G 1/10

(54) **ENGIN SPATIAL**
RAUMFAHRZEUG
SPACECRAFT

(30) Priorité: 23.05.2016 FR 1654593
(43) Date de publication de la demande: 30.01.2019
(73) Titulaire: Airbus Defence and Space SAS, 31402 Toulouse Cedex 4 (FR)
(72) Inventeur: LECONTE, Sylvain, 31402 Toulouse (FR); DELTOUR, Bernard, 31402 Toulouse (FR); BEREND, Christophe, 31402 Toulouse (FR)
(74) Mandataire: Cabinet Plasseraud
(86) Numéro de dépôt international: PCT/FR2017/051279
(87) Numéro de publication internationale: WO 2017/203164

(56) Documents cités:
- WO-A1-01/81173
- DE-A1- 3 223 839
- FR-A1- 2 823 182
- US-A- 3 307 783
- US-A1- 2014 299 714
- HWANGBO H: "MOTORIZED THERMAL CONTROL SHADE", ENVIRONMENTAL AND THERMAL CONTROL SYSTEMS FOR SPACE VEHICLES -LES SYSTEMES DE REGULATION THERMIQUE ET D'ENVIRONMENT DESVEHICULES SPATIAUX. INTERNATIONAL SYMPOSIUM, XX, XX, 1 janvier 1983 (1983-01-01), pages 345-349, XP000884251,

## Description

La présente invention se situe dans le domaine des engins spatiaux.

En particulier, la présente invention concerne le domaine du contrôle thermique des satellites de télécommunication.

La dissipation thermique de la charge utile des satellites de télécommunication est assurée par des radiateurs montés sur les murs Nord et Sud. Ces radiateurs sont dimensionnés de manière à permettre d'évacuer la chaleur générée par la charge utile dans des conditions de fonctionnement extrême typiquement lorsque la charge utile fonctionne à plein régime, que la surface réfléchissante des radiateurs est dégradée et en supposant que l'on soit en période de Solstice et qu'en conséquence l'un des radiateurs soit réchauffé par un rayonnement solaire incident.

Dans des conditions de fonctionnement extrême inverses telles que par exemple lors du transfert du satellite de l'orbite d'injection vers l'orbite géo-stationnaire, la charge utile va subir des températures très froides. Elle sera alors réchauffée, par exemple par des réchauffeurs, pour la maintenir au-dessus de sa température minimum de fonctionnement. La puissance électrique nécessaire à ce réchauffage peut représenter jusqu'à 30% de la puissance électrique générée par les générateurs solaires. Il serait souhaitable d'utiliser cette puissance électrique à d'autres fins par exemple pour augmenter la force propulsive du satellite lors de la phase de transfert et ainsi écourter la durée du transfert. Ceci est d'autant plus critique, lors de l'utilisation d'une propulsion électrique (seule ou en alternance avec de la propulsion chimique) car les temps de transferts durent plusieurs mois.

Le document FR 2 823 182 propose d'équiper les satellites de radiateurs déployables ayant une face radiante et une face isolante. Lors de la phase de transfert du satellite sur l'orbite géostationnaire, les radiateurs déployables sont repliés de sorte que leur face isolante soit dirigée vers l'espace. Une fois en orbite géostationnaire, ces radiateurs déployables sont déployés afin que leur surface radiante soit dirigée vers l'espace.

Toutefois, ces radiateurs déployables sont coûteux, volumineux et complexes à installer notamment en raison de la difficulté à réaliser et à monter des systèmes de transfert de chaleur des radiateurs vers les radiateurs déployables.

Par ailleurs, en position déployée, ces radiateurs déployables dépassent latéralement ou verticalement du corps du satellite de sorte que leur déploiement et leur repliement ne peut pas être commandé d'une manière décolérée de la position ou du mouvement des autres appendices du satellite. Ainsi, la position déployée du radiateur déployable n'est pas compatible avec toutes les positions des panneaux solaires, avec toutes les positions des antennes ou avec l'utilisation de certains propulseurs.

Le document « Motorized thermal control shade » de Han Hwangbo (XP 000884251) décrit un dispositif d'isolation thermique comprenant deux rouleaux latéraux déroulés par un axe rotatif central. Ce dispositif d'isolation thermique est contraignant car il nécessite de percer le mur du satellite pour faire passer l'axe rotatif. Ce document décrit également un dispositif d'isolation thermique comprenant un unique rouleau latéral. Toutefois, ce mode de réalisation impose que le réseau de caloducs qui supporte les équipements dissipatifs s'étende sur toute la largeur du mur.

La présente invention a pour but de proposer un engin spatial comportant un dispositif d'isolation thermique peu encombrant, léger et pouvant être mis en oeuvre indépendamment des positions des autres appendices.

A cet effet, l'invention a pour objet un engin spatial comprenant une caisse ayant au moins une face, au moins un radiateur (22) porté par ladite face et au moins un dispositif d'isolation thermique propre à isoler thermiquement la caisse de l'espace ;ledit dispositif d'isolation thermique comprenant au moins une feuille souple isolante déplaçable entre une position dépliée dans laquelle la feuille souple recouvre une zone recouvrable du radiateur, et une position pliée sur elle-même dans laquelle ladite zone recouvrable du radiateur est exposée vers l'espace, caractérisé en ce que la feuille souple comporte plusieurs plis qui s'étendent perpendiculairement à la direction de déplacement de la feuille souple, lesdits plis étant rabattus les uns contre les autres lorsque la feuille souple est en position pliée, lesdits plis étant écartés les uns des autres lorsque la feuille souple est dans une position dépliée.

Suivant des modes particuliers de réalisation, l'engin spatial comporte l'une ou plusieurs des caractéristiques suivantes :
- Le radiateur présente des bords longitudinaux. La feuille souple est centrée par rapport aux bords longitudinaux du radiateur, lorsque la feuille souple est en position pliée.
- Engin qui comporte des panneaux solaires. La zone recouvrable comprend une zone du radiateur non recouverte par les panneaux solaires, lorsque les panneaux solaires sont en position repliée.
- Le radiateur comportant une face principale externe, le dispositif d'isolation thermique comprenant :
   - une première feuille souple et une deuxième feuille souple ayant chacune un bord fixe maintenu fixe par rapport au radiateur et un bord opposé, dit bord latéral
   - un unique câble d'entrainement propre à entrainer en déplacement simultanément le bord latéral de la première feuille souple et le bord latéral de la deuxième feuille souple, ledit câble d'entrainement s'étendant au moins deux fois au droit de la face principale externe du radiateur selon une direction perpendiculaire aux bords latéraux des feuilles souples, ledit câble d'entraînement étant fixé en au moins un point de fixation du bord latéral de la première feuille souple et en au moins un point de fixation du bord latéral de la deuxième feuille souple,
   - au moins quatre galets de guidage propres à guider ledit câble d'entrainement, et
   - un unique moteur propre à entrainer le câble d'entrainement.
   Avantageusement, ce dispositif permet de replier et de déplier les deux feuilles souples à l'aide d'un seul moteur d'entrainement.
- Le câble d'entrainement s'étend quatre fois au droit de la face principale externe du radiateur selon une direction perpendiculaire aux bords latéraux des feuilles souples, ledit câble d'entraînement étant fixé en deux points de fixation du bord latéral de la première feuille souple et en au moins deux points de fixation du bord latéral de la deuxième feuille souple, et dans lequel le dispositif d'isolation thermique comprend sept galets de guidage. Avantageusement, ce dispositif d'isolation thermique est plus stable et plus robuste et permet de plier et déplier le dispositif plus rapidement sans craindre de blocage.
- Le dispositif d'isolation thermique comporte un dispositif apte à mettre sous tension le câble d'entrainement.
- Avantageusement, ce dispositif de mise sous tension permet d'absorber les variations de longueur du câble d'entrainement liées aux fortes variations de température.
   - Le dispositif d'isolation thermique comporte en outre une première tige d'entrainement fixée au bord latéral de la première feuille souple et une deuxième tige d'entrainement fixée au bord latéral de la deuxième feuille souple, le ou lesdits câble(s) d'entraînement étant fixé(s) à la première tige d'entrainement et à la deuxième tige d'entrainement.
   - Le dispositif d'isolation thermique comporte en outre :
      - au moins un élément élastique propre à rapprocher la première tige d'entrainement et la deuxième tige d'entraînement, et
      - un dispositif de déblocage propre à sectionner le câble d'entrainement en cas de blocage du dispositif d'isolation thermique.
   - L'élément élastique et le dispositif de déblocage permettent avantageusement de ramener les feuilles souples dans une position pliée en cas de panne du dispositif d'isolation thermique.

Avantageusement, les tiges d'entrainement permettent d'entrainer simplement une feuille souple de faible épaisseur sans risque de la déchirer.
- Le dispositif d'isolation thermique comprend un cache propre à protéger la feuille souple, lorsque la feuille souple est en position pliée.
- Ladite au moins une face comprend une face Nord, une face Sud et une face anti-Terre et qui comprend un panneau d'isolation thermique déployable entre une position dans laquelle le panneau d'isolation thermique est disposé contre la face Nord ou contre la face Sud, et une position dans laquelle le panneau d'isolation thermique est disposé contre la face anti-Terre.
- Le panneau d'isolation thermique comporte une structure rigide sur laquelle une feuille isolante est fixée.

L'invention concerne également une utilisation d'un engin spatial ayant les caractéristiques mentionnées ci-dessus, au cours de laquelle le dispositif d'isolation thermique est plié ou déplié une fois que l'engin spatial est en orbite géostationnaire en fonction des variations thermiques induites par les saisons ou induites par l'utilisation de la charge utile.
Avantageusement, le dispositif d'isolation thermique selon l'invention est simple et consomme peu d'énergie électrique.
Avantageusement, le dispositif d'isolation thermique selon l'invention est peu encombrant. Même en position déplié, il ne dépasse pas du radiateur sur lequel il est monté. Il ne crée donc pas d'interférences ou d'obstructions avec les appendices du satellite.
Avantageusement, le dispositif d'isolation thermique selon l'invention est réversible. Il peut être déplié ou plié à tout moment de la mission. Avantageusement, le dispositif d'isolation thermique selon l'invention permet de recouvrir une portion choisie d'un radiateur. Le positionnement de cette portion de radiateur peut être choisi, lors de la fabrication du satellite, par exemple, en fonction de la charge utile disposée de l'autre côté du radiateur. La surface de cette portion peut être adaptée en repliant plus ou moins la feuille souple.
Avantageusement, le dispositif d'isolation thermique selon l'invention peut être installé tardivement dans la phase d'intégration.

L'invention sera mieux comprise à la lecture de la description qui va suivre, donnée uniquement à titre d'exemple et faite en se référant aux figures sur lesquelles :
- La figure 1 est une vue schématique d'un engin spatial selon l'invention ;
- La figure 2 est une vue schématique en perspective d'un dispositif d'isolation thermique de l'engin spatial selon l'invention;
- La figure 3 est une vue schématique de face du dispositif d'isolation thermique illustré sur la figure 2 sur laquelle des flèches indiquent les forces appliquées pour déplier la feuille souple ;
- La figure 4 est une vue schématique de face du dispositif d'isolation thermique illustré sur la figure 2 sur laquelle des flèches indiquent les forces appliquées pour plier la feuille souple ;
- La figure 5 est une vue schématique en perspective d'un engin spatial selon un premier mode de réalisation non couvert par la présente demande de brevet;
- La figure 6 est une vue schématique de face d'un engin spatial selon un deuxième mode de réalisation non couvert par la présente demande de brevet et sur laquelle la feuille souple est en position semi pliée ;
- La figure 7 est une vue similaire à la vue de la figure 6 sur laquelle la feuille souple est en position dépliée ; et
- La figure 8 est une vue schématique en perspective d'un engin spatial comportant un panneau déployable selon l'invention.

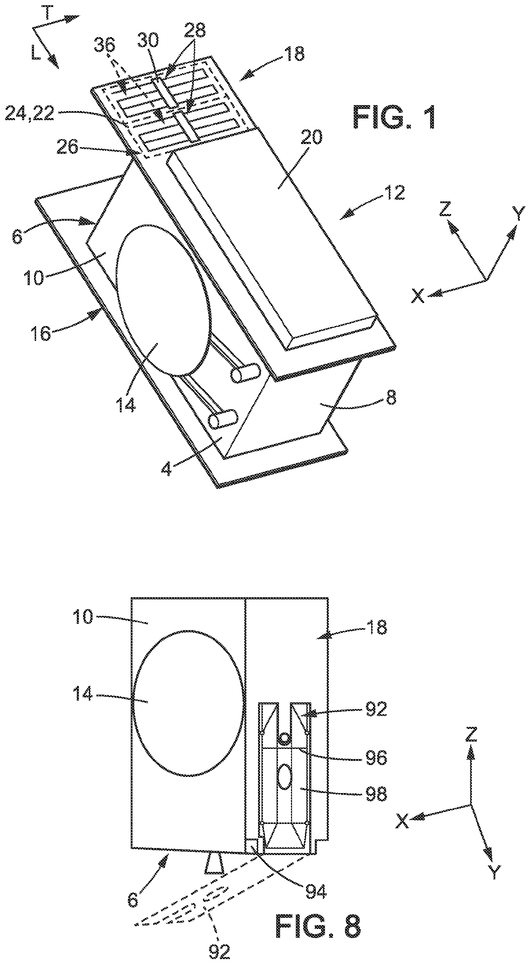

En référence à la figure 1, un engin spatial 2 selon l'invention se présente sous la forme d'une caisse 4 parallélépipédique. Cette caisse 4 présente toujours la même face dirigée vers la Terre, cette face étant appelée la face Terre 6. La face opposée et parallèle à la face Terre 6 est quant à elle appelée la face anti-Terre 8.

La face + X, aussi appelée face Est 10, et la face -X, aussi appelée face Ouest 12, sont des faces opposées, parallèles entre elles et perpendiculaires au plan de l'Equateur une fois le satellite à poste sur son orbite géostationnaire. Des antennes de communication 14 sont généralement fixées sur les faces -X 10 et +X 12. La face - Y, aussi appelée face Nord 16, et la face + Y, aussi appelée face Sud 18, sont deux autres faces de la caisse. Elles sont opposées, parallèles entre elles et perpendiculaires à l'axe Nord-Sud de la Terre.

L'engin spatial 2 comprend généralement un panneau solaire 20 et un radiateur 22 fixés sur la face +Y 18, et un panneau solaire et un radiateur principal fixés sur la face -Y 16 (non représentés).

Les radiateurs 22 sont utilisés pour refroidir des équipements électroniques contenus dans la caisse. Ces équipements électroniques non représentés sur les figures sont reliés thermiquement aux radiateurs, par exemple, par l'intermédiaire de caloducs également non représentés.

Chaque radiateur 22 de forme générale parallélépipédique, présente une face principale interne fixée sur la caisse et une face principale externe 24 opposée à la face principale interne et située du côté de l'espace extérieur à l'engin spatial. Le radiateur 22 s'étend selon une direction longitudinale L et selon une direction transversale T. Il présente des bords longitudinaux 26.

L'engin spatial 2 comporte en outre deux dispositifs d'isolation thermique 28 selon un premier mode de réalisation de l'invention. Ces deux dispositifs d'isolation 28 sont installés sur la face externe 24 du radiateur, dans le prolongement l'un de l'autre.

Chaque dispositif d'isolation thermique 28 comprend un cache de protection 30, une première feuille souple isolante 32 et une deuxième feuille souple isolante 34 pliées sous le cache de protection 30 comme dans la représentation de la figure 1.

Le cache de protection 30 est, par exemple, constitué par un fourreau ou un capot.

La première feuille souple 32 est constituée uniquement par une feuille de Kapton. Cette feuille de Kapton peut, par exemple, avoir une face interne ayant un facteur thermo-optique ε = 0.05 et une face externe ayant les facteurs thermo-optiques suivants : α = 0.45, ε = 0.93.

La face interne de la feuille de Kapton est avantageusement recouverte d'aluminium. Elle est disposée en regard du radiateur 22. La face externe de la feuille de Kapton est, de préférence, peinte en noir.

La deuxième feuille souple 34 est identique à la première feuille souple.

Lorsque les première et deuxième feuilles souples 32, 34 sont en position pliée comme représentée sur la figure 1, elles s'étendent selon la direction longitudinale L. Lorsque les première et deuxième feuilles souples 32, 34 sont en position pliée, elles sont également disposées de manière à être centrées par rapport aux bords longitudinaux 26 du radiateur.

Selon la présente invention, la première feuille souple 32 et la deuxième feuille souple 34 sont déplaçables entre une position dépliée dans laquelle elles recouvrent une zone 36 du radiateur, dite zone recouvrable, et une position pliée dans laquelle elles sont pliées sur elle-même de sorte que cette zone recouvrable 36 du radiateur est exposée vers l'espace.

La zone recouvrable 36 du radiateur est une zone non recouverte par les panneaux solaires 20, lorsque les panneaux solaires 20 sont en position repliée. Cette zone recouvrable 36 du radiateur est disposée dans le prolongement longitudinal des panneaux solaires 20. Cette zone recouvrable 36 est contenue dans un espace délimité par les faces latérales du radiateur 20. Dans le mode de réalisation représenté, cette zone recouvrable 36 présente une forme rectangulaire ayant un premier côté 52 et un deuxième côté 54 dirigés selon la direction longitudinale L.

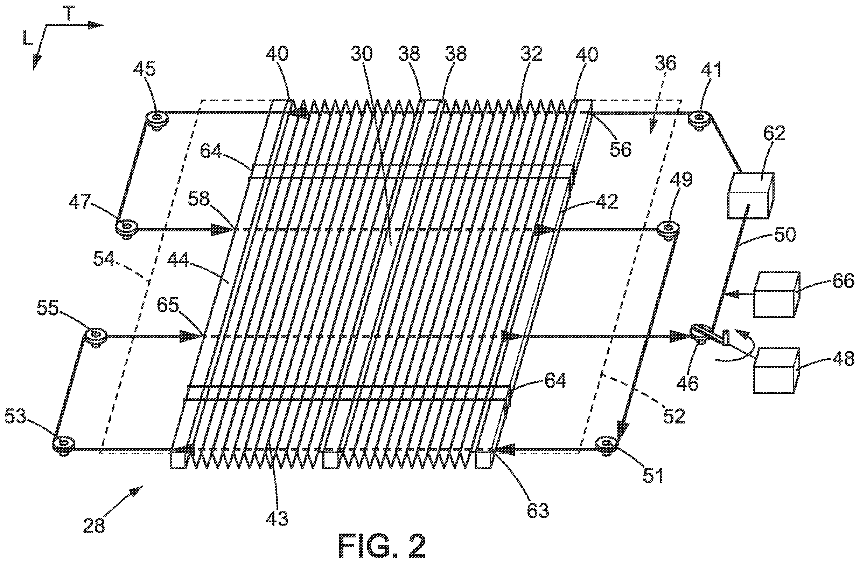

En référence à la figure 2, la première feuille souple 32 présente une forme sensiblement rectangulaire ayant un bord fixe 38 solidaire du radiateur et fixe par rapport à celui-ci et un bord opposé, dit bord latéral 40.

Le bord fixe 38 peut, par exemple, être fixé au cache de protection 30.

Une première tige d'entrainement 42 est fixée tout le long du bord latéral 40 de la première feuille souple et une deuxième tige d'entrainement 44 est fixée tout le long du bord latéral 40 de la deuxième feuille souple.

Les première 32 et deuxième 34 feuilles souples comportent plusieurs plis 43 qui s'étendent selon la direction longitudinale L. Ces plis 43 sont rabattus les uns contre les autres lorsque la première feuille souple 32 est en position pliée. Ces plis 43 sont écartés les uns des autres lorsque la première feuille souple 32 est dans une position dépliée. Ces plis 43 forment une configuration en « accordéon ».

Le dispositif d'isolation thermique 28 comprend en outre un mécanisme de pliement/ dépliement des feuilles souples par déplacement de leur bord latéral 40 selon une direction perpendiculaire à la direction de ces bords. Ce mécanisme de pliement/dépliement permet avantageusement de plier simultanément la première feuille souple 32 et la deuxième feuille souple 34 à l'aide d'un unique moteur.

Ce mécanisme de pliement/dépliement comprend sept galets de guidage 41, 45, 47, 49, 51, 53, 55, une poulie d'entrainement 46, un moteur 48 propre à entrainer en rotation la poulie 46 et un unique câble d'entrainement 50 propre à entrainer en déplacement simultanément la première tige d'entrainement 42 et la deuxième tige d'entrainement 44 selon un mouvement propre à plier ou à déplier la première feuille souple 32 et la deuxième feuille souple 34.

Trois galets de guidages 41,49, 51 et la poulie d'entrainement 46 sont répartis le long d'un premier côté 52 de la zone 36 recouvrable du radiateur, quatre autres galets de guidage 45, 47, 53, 55 sont répartis le long d'un deuxième côté 54 de la zone 36 recouvrable du radiateur, avec le premier côté 52 et le deuxième côté 54 dirigés selon la direction longitudinale L.

La poulie d'entrainement 46 présente deux enroulements, un des enroulements a le même rôle qu'un galet de guidage.

En variante, les galets de guidage sont remplacés par des poulies libres.

Dans le mode de réalisation représenté, le câble d'entrainement 50 s'étend quatre fois au droit de la zone 36 recouvrable du radiateur selon une direction correspondant à la direction de déplacement de feuilles souples, c'est-à-dire selon la direction transverse T du radiateur.

En particulier, le câble d'entrainement 50 est enroulé sur un premier enroulement de la poulie d'entrainement 46. Il s'étend d'abord vers un premier galet de guidage 41 situé à une extrémité du premier côté 50.

Le câble d'entrainement 50 s'étend selon la direction transverse T. Il traverse la zone recouvrable 36 du radiateur. Il est monté sur un deuxième galet de guidage 45 situé à une extrémité du deuxième côté 52 en vis-à-vis du premier galet 44. Lors de cette traversée, le câble d'entrainement 50 est fixé à la première tige d'entrainement 42 en un point de fixation.

Le câble d'entrainement 50 s'étend alors selon la direction longitudinale L. Il est monté autour d'un galet de guidage 47 situé du deuxième côté 52 de la zone 36 recouvrable du radiateur.

Puis, le câble d'entrainement 50 s'étend selon la direction transversale T. Il traverse une deuxième fois la zone recouvrable 36. Il est monté autour d'un galet de guidage 49 situé sur le premier côté 54 de la zone recouvrable 36. Lors de cette traversée, le câble d'entrainement 50 est fixé à la deuxième tige d'entrainement 44 en un point de fixation 58. Le câble d'entrainement 50 se dirige alors selon la direction longitudinale L vers un galet de guidage 51 situé à une autre extrémité du premier côté 52 de la zone recouvrable.

Puis, le câble d'entraînement 50 réalise à nouveau un cheminement similaire. Ainsi, il est à nouveau tendu à deux reprises au-dessus de la zone recouvrable 36 entre le galet de guidage 51 et deux autres galets de guidage 53, 55 situés du deuxième côté 54 de la zone recouvrable. A chaque fois que le câble d'entrainement 50 traverse le zone recouvrable 36, il est fixé soit en un point de fixation 56, 63 de la première tige d'entrainement 42, soit en un point de fixation 58, 65 de la deuxième tige d'entrainement 44. Puis, le câble d'entrainement 50 est enroulé autour d'un deuxième enroulement de la poulie d'entrainement 46.

Avantageusement, les points de fixation et les galets ou poulie sont répartis sensiblement à équidistance les uns des autres le long de chaque côté 52, 54 de la zone recouvrable 36.

De préférence, le dispositif d'isolation thermique 28 comporte un dispositif 62 de mise sous tension du câble d'entrainement. Ce dispositif est adapté pour maintenir une tension constante sur le câble d'entrainement 50, malgré les variations de températures auxquelles l'engin spatial est soumis.

De préférence, le dispositif d'isolation thermique 28 comporte en outre au moins un élément élastique 64 propre à rapprocher la première tige d'entrainement 42 de la deuxième tige d'entraînement 44, et un dispositif de déblocage 66 propre à sectionner le câble d'entrainement 50 en cas de blocage du dispositif d'isolation thermique.

L'élément élastique 64 est, par exemple, constitué par une bande élastique montée autour de la première tige d'entrainement 42 et de la deuxième tige d'entrainement 44.

De préférence, le dispositif d'isolation thermique 28 comporte un dispositif d'observation du câble d'entrainement (non représenté) apte à mesurer la tension et le déplacement du câble d'entrainement et apte à échanger des informations concernant ces observations, par exemple avec le moteur 48. Ce dispositif pourrait, par exemple, être le dispositif 62 de mise sous tension ou bien être inclut dans le moteur 48. A l'aide des informations fournies par le moteur 48 sur les déplacements en cours du câble d'entrainement (repliement, dépliement, vitesse associée, etc). Ce dispositif d'observation est apte à estimer le taux d'ouverture ou de fermeture du dispositif d'isolation thermique 28 (et donc de recouvrement de la zone recouvrable 36). Ce dispositif d'observation est également propre à détecter une situation de blocage ou de déraillement du câble, et ainsi de modifier les actions du moteur. Par exemple, en cas de blocage du câble d'entrainement il peut être s'avérer utile d'effectuer un déplacement court en sens contraire (passage du repliement au dépliement ou l'inverse) pour ensuite reprendre la manoeuvre initiale. En cas de situation de blocage persistante du dispositif d'isolation thermique 28, le dispositif d'observation est apte à commander le dispositif de déblocage 66 afin que celui-ci sectionne le câble d'entrainement 50.

En variante, le dispositif d'isolation thermique ne comporte pas de cache de protection. La feuille souple est directement pliée sur une partie du radiateur 20.

En variante, l'engin spatial comporte un seul dispositif d'isolation thermique de plus grande longueur propre à recouvrir la même zone 32 du radiateur.

En variante également, l'engin spatial comporte plus de deux dispositifs d'isolation propre à recouvrir la même zone recouvrable 36.

En variante, le dispositif d'isolation thermique ne comporte qu'une feuille souple ayant un bord rendu solidaire d'un bord longitudinal 26 du radiateur. Cette feuille souple est propre à s'étendre sur la même zone recouvrable 36.

En variante, le dispositif d'isolation thermique est propre à isoler uniquement une partie de la zone située dans le prolongement des antennes en position repliée.

En variante, le dispositif d'isolation thermique ne comporte pas de première et de deuxième tiges d'entrainement. Dans ce cas, le câble d'entrainement est directement fixé aux bords latéraux des premier et deuxième feuilles souples.

En variante, le dispositif d'isolation thermique comporte deux câbles d'entraînement et deux moteurs indépendants afin de gérer le pliement/dépliement de premier côté 52 et du deuxième côté 54 de façon indépendante. Une telle variante complexifie le système mais offre un surcroît de résilience en cas de panne d'un moteur et un surcroît de flexibilité dans la gestion du recouvrement de la zone recouvrable 36.

En variante, le dispositif d'isolation thermique comporte deux moteurs 48, un moteur principal et un moteur secondaire (non représenté). Le moteur secondaire n'est utilisé qu'en remplacement du moteur principal pour pallier à un disfonctionnement ou une panne de celui-ci. Cette variante permet d'accroître la résilience du dispositif d'isolation thermique. Il est également aussi possible de ne doubler que la partie la plus critique du moteur et non pas le moteur dans son intégralité. Il s'agit là d'un compromis entre la généricité de la solution et le coût de la redondance.

Selon une variante moins avantageuse, le mécanisme de pliement/ dépliement comprend uniquement quatre galets de guidage (ou trois galets de guidage et une poulie). Le câble d'entrainement 50 traverse uniquement deux fois la zone recouvrable 36. Le câble d'entrainement 50 est fixé en un unique point de fixation de la première tige d'entrainement et en un unique points de fixation de la deuxième tige d'entrainement.

Selon une variante non représentée, le dispositif d'isolation thermique comporte des première et deuxième feuilles souples 32, 34, se présentant sous la forme de deux éventails disposés tête bêche au centre de la zone recouvrable 36. Les feuilles souples 32, 34 comportent des plis, comme un éventail, chacune recouvrant en position dépliée, une portion de la zone recouvrable 36 en forme d'arc de cercle. La longueur de la première et de la deuxième tige d'entrainement 42, 44 est au maximum égale à la moitié de la largeur de la zone recouvrable 36 afin que le dispositif ne déborde pas des murs du satellite. Le dispositif d'isolation thermique peut être déplié ou replié à l'aide d'un seul moteur entraînant les deux côtés du dispositif ou bien de deux moteurs, chacun entraînant un seul côté du dispositif.

Selon une variante moins avantageuse non représentée, le dispositif d'isolation thermique 28 selon le premier mode de réalisation de l'invention peut être orienté selon la direction transversale T, les feuilles souples se déplacent alors selon la direction longitudinale L du radiateur. Cependant, de manière générale, une telle variante requiert d'utiliser une structure plus longue, plus couteuse et plus lourde que dans le cas où les feuilles souples se déplacent selon la direction transverse T du radiateur.

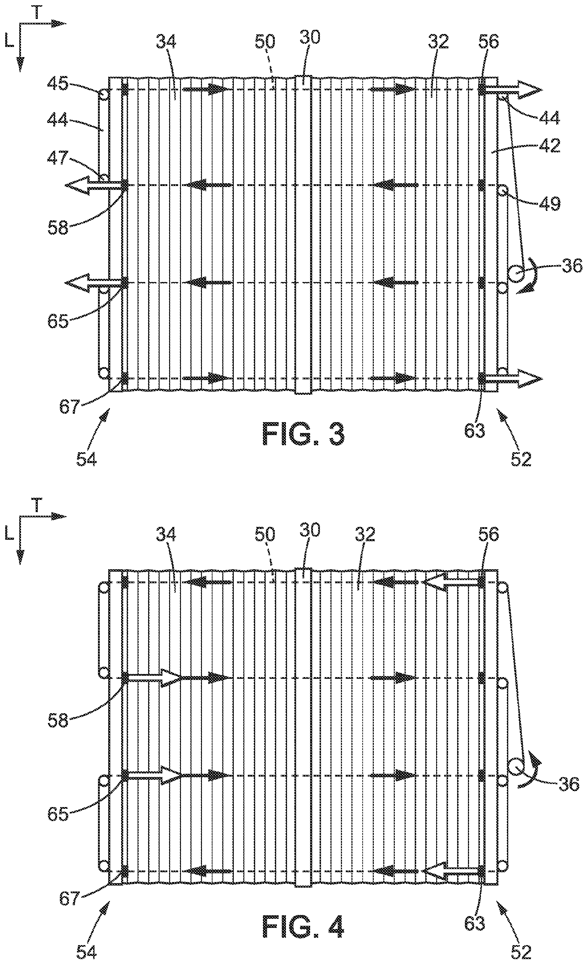

En fonctionnement, en référence à la figure 3, lors du dépliement de la première 32 et de la deuxième 34 feuilles souples, le câble d'entrainement 50 est propre à exercer sur la première tige d'entraînement 42 une force dirigée vers le premier côté 52 aux points de fixation 56 et 63, et sur la deuxième tige d'entraînement 44 une force dirigée vers le deuxième côté 54 aux points de fixation 58 et 65.

En référence à la figure 4, lors du pliement de la première 32 et de la deuxième 34 feuilles souples, le câble d'entrainement 50 est propre à exercer sur la première tige d'entraînement 42 une force dirigée vers le cache central 30 aux points de fixation 56 et 63, et sur la deuxième tige d'entraînement 44 une force dirigée vers le cache central 30 aux points de fixation 58 et 65.

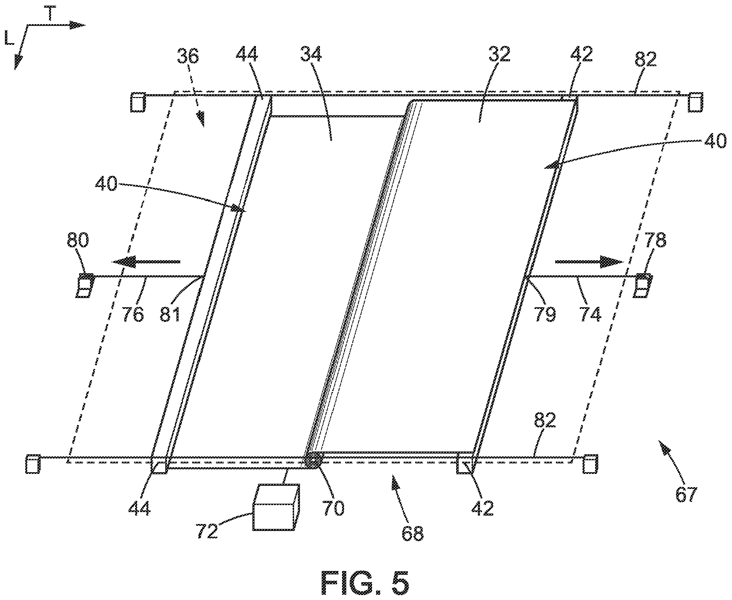

En référence à la figure 5, l'engin spatial 67 selon un premier mode de réalisation non couvert par la présente demande de brevet comporte un dispositif d'isolation thermique 68 ayant un rouleau 70, un moteur 72 apte à entraîner en rotation le rouleau 70, une première feuille souple 32 et une deuxième feuille souple 34 propres à être enroulées autour du rouleau 70.

Le rouleau 70 forme un cache de protection des feuilles souples. Il peut être disposé sur le radiateur 22 dans le même positionnement centré et selon la direction longitudinale L que le dispositif d'isolation thermique 28 selon l'invention.

La première feuille souple 32 et la deuxième feuille souple 34 présentent chacune un bord fixe non représenté solidaire du rouleau 70 et un bord opposé, dit bord latéral 40.

Une première tige d'entrainement 42 est fixée le long du bord latéral 40 de la première feuille souple 32 et une deuxième tige d'entrainement 44 est fixée le long du bord latéral 40 de la deuxième feuille souple 34.

La première 32 et la deuxième 34 feuilles souples sont constituées de la même manière que la première feuille souple du dispositif d'isolation thermique 28 selon le premier mode de réalisation de l'invention à l'exception du fait qu'elles ne comportent pas de plis 43.

Le dispositif d'isolation thermique 72 comprend un premier ressort de rappel 74 à couple constant fixé à un point de fixation 79 de la première tige d'entrainement 42, un premier système de tension 78 ayant un ressort à couple constant et fixé au ressort de rappel 74 et, un deuxième ressort de rappel 76 à couple constant fixé à un point de fixation 81 de la deuxième tige d'entrainement 44, un deuxième système de tension 80 fixé au deuxième ressort de rappel. Les premier 78 et le deuxième 80 système de tension exercent une tension constante sur les premier 74 et deuxième 76 ressorts de rappel pour qu'ils puissent maintenir les feuilles souples tendues, lors de la rotation du rouleau d'entrainement 70. Cette force de rappel est fonction de la dimension des feuilles souples. Cette force de rappel est, par exemple, comprise entre 10 et 150 Newtons.

Les points de fixation 79, 81 sont disposés au centre de la première tige d'entrainement 42 et de la deuxième tige d'entrainement 44.

Les ressorts de rappel 74 et 76 sont disposés chacun au centre du premier côté 52 et respectivement du deuxième côté 54 de la zone recouvrable 36 du radiateur.

Les ressorts de rappel 74, 76 n'ont pas une fonction d'entrainement des feuilles souples 32, 34. Cette fonction est réalisée par le rouleau d'entrainement 70. Les ressorts de rappel 74, 76 et les systèmes de tension 78, 80 ont uniquement pour fonction de maintenir les feuilles souples planes et tendues.

Avantageusement, des câbles de guidage 82 sont tendus selon la direction transversale T entre chaque extrémité du rouleau 70 et les extrémités longitudinales de la zone recouvrable 36. La première tige d'entrainement 42 et la deuxième tige d'entrainement 44 sont propres à coulisser sur les câbles de guidage 82 pour faciliter le pliement et le dépliement de la première feuille souple 32 et de la deuxième feuille souple 34.

En variante, le dispositif d'isolation thermique 68 ne comporte qu'une feuille souple fixée au rouleau 70. Dans ce cas, les feuilles souples en position pliée (c'est-à-dire le rouleau 70) sont disposées selon la direction transverse T, par exemple le long du bord du radiateur 22.

Le dispositif d'isolation thermique 68 de l'engin spatial selon ce mode de réalisation peut également comporter un élément élastique propre à rapprocher la première tige d'entrainement 42 et la deuxième tige d'entrainement 44, en cas de blocage du dispositif d'isolation thermique.

En variante (non représentée), le moteur 72 peut être situé à l'extérieur du rouleau. Dans ce cas, le moteur 72 déplie le dispositif d'isolation thermique 68 via des câbles d'entrainement et un ressort situé à l'intérieur du rouleau adapté à ramener le dispositif d'isolation thermique en position replié. La synchronisation du déploiement du dispositif d'isolation thermique est assurée par un système de poulie sur lequel parcourt un unique câble d'entrainement.

En variante, le dispositif d'isolation thermique 68 comporte deux moteurs 72 indépendants afin de gérer le pliement/dépliement de premier côté 52 et du deuxième côté 54 de façon indépendante. Une telle variante complexifie le système mais offre un surcroît de résilience en cas de panne d'un moteur et un surcroît de flexibilité dans la gestion du recouvrement de la zone recouvrable 36.

En variante, le dispositif d'isolation thermique 68 comporte deux moteurs 72, un moteur principal et un moteur secondaire (non représenté). Le moteur secondaire n'est utilisé qu'en remplacement du moteur principal pour pallier à un disfonctionnement ou une panne de celui-ci. Cette variante permet d'accroître la résilience du dispositif d'isolation thermique. Il est également aussi possible de ne redonder que la partie la plus critique du moteur et non pas le moteur dans son intégralité. Il s'agit là d'un compromis entre la généricité de la solution et le coût de la redondance.

En variante (non représentée), le dispositif d'isolation thermique 68 comporte deux rouleaux d'entrainement 70 parallèles et identiques, quasiment joints et situés au centre de la zone recouvrable 36 du radiateur. Une telle variante permet de gérer séparément le masquage du premier côté 52 et du deuxième côté 54 de la zone recouvrable 36 du radiateur. Cette variante correspond au dispositif décrit précédemment pour ce premier mode de réalisation non couvert par la présente demande de brevet à l'exception que chaque rouleau d'entrainement 70 ne commande qu'un seul côté de la zone recouvrable 36 du radiateur à l'aide d'une seule feuille souple 32. Ainsi, le premier rouleau d'entrainement 70 ne commande que le recouvrement du premier côté 52 de la zone recouvrable 36 du radiateur et le deuxième rouleau d'entrainement 70 ne commande que le recouvrement du deuxième côté 54 de la zone recouvrable 36 du radiateur. Cette variante peut être utilisée à l'aide de deux moteurs 72 : un moteur entraînant chaque rouleau de façon indépendante. Cette solution offre un surcroît de flexibilité et de résilience en cas de panne d'un des deux moteurs. Alternativement, cette variante peut être utilisée à l'aide d'un seul moteur 72 : le moteur entraînant les deux rouleaux à la fois. Cette solution permet de simplifier la solution par rapport à une solution à deux moteurs. Dans les deux cas, avec un seul ou deux moteurs, identiquement à ce qui a été décrit précédemment pour ce deuxième mode de réalisation, ce dispositif comporterait des tiges d'entrainement 42, 44, des câbles de guidage 82 et des ressorts de rappel 74, 76.

Selon une variante moins avantageuse non représentée, le dispositif d'isolation thermique 68 selon ce premier mode de réalisation non couvert par la présente demande de brevet peut être orienté selon la direction transversale T, les feuilles souples se déplacent alors selon la direction longitudinale L du radiateur. Cependant, de manière générale, une telle variante requiert d'utiliser une structure plus longue, plus couteuse et plus lourde que dans le cas où les feuilles souples se déplacent selon la direction transverse T du radiateur.

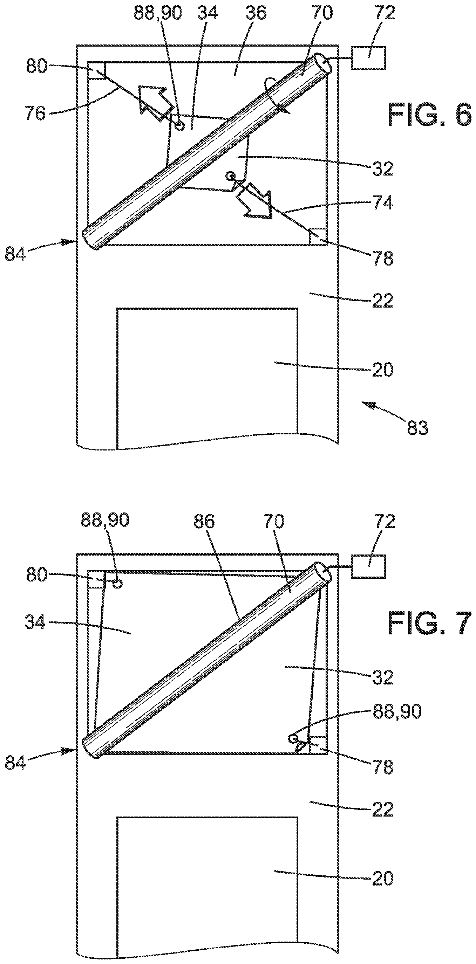

En référence aux figures 6 et 7, le dispositif d'isolation thermique 84 selon un deuxième mode de réalisation non couvert par la présente demande de brevet est identique au dispositif d'isolation thermique 68 selon le premier mode de réalisation non couvert par la présente demande de brevet à l'exception du fait que le rouleau 70 s'étend selon une direction oblique par rapport au radiateur 22 et du fait que la première feuille souple 32 et la deuxième feuille souple 34 présentent une forme triangulaire.

Les éléments du dispositif d'isolation thermique 84 selon le deuxième mode de réalisation non couvert identiques aux éléments du dispositif d'isolation thermique 68 selon le premier mode de réalisation non couvert portent les mêmes références et ne seront pas décrits à nouveau.

Dans ce deuxième mode de réalisation non couvert, la première feuille souple 32 et la deuxième feuille souple 34 présentent un côté 86 fixé au rouleau 70 et un coin opposé 88 muni d'un point de fixation 90.

Le premier ressort de rappel 74 est relié au point de fixation 90 du coin de la première feuille souple. Le deuxième ressort de rappel 76 est relié au point de fixation 90 du coin de la deuxième feuille souple.

En variante, comme pour le premier mode de réalisation non couvert, le dispositif d'isolation thermique 84 comprend deux moteurs indépendants afin de gérer le pliement/dépliement de la première feuille souple 32 et la deuxième feuille souple 34 de façon indépendante.

En variante, comme pour le premier mode de réalisation non couvert, le dispositif d'isolation thermique 84 comprend deux moteurs, un moteur principal et un moteur secondaire (non représenté). Le moteur secondaire n'étant utilisé qu'en remplacement du moteur principal pour pallier à un disfonctionnement ou une panne de celui-ci.

En variante, comme pour le premier mode de réalisation non couvert, le dispositif d'isolation thermique 84 comprend deux rouleaux d'entrainement 70 parallèles et identiques, quasiment joints, au lieu d'un seul comme illustré sur les figures 6 et 7.

Le dispositif d'isolation thermique selon l'invention peut être déplié pendant la phase de transfert d'orbite et être plié une fois sur l'orbite géostationnaire. Puis, une fois en mode nominal, le dispositif d'isolation thermique selon l'invention peut être déplié ou plié pour gérer les variations thermiques induites par les saisons ou pour pallier au vieillissement des miroirs. Enfin, le dispositif d'isolation thermique selon l'invention peut être plié en cas de panne pour limiter le refroidissement de la charge utile.

Selon un mode de réalisation non représenté, le dispositif d'isolation thermique comprend une feuille de Kapton aluminisée sur laquelle est attaché au moins un ressort à effort de réaction constant (tel que par exemple des clinquants) propre à exercer une force de rappel sur la feuille de Kapton et tendant à la ramener dans une position enroulée sur elle-même. Lors de son utilisation, le dispositif d'isolation thermique est maintenu plaqué contre la face Nord 18 ou contre la face Sud 16 par au moins une butée permettant de bloquer les au moins un ressort. Lorsqu'on souhaite escamoter le dispositif, les butées sont déverrouillées, ce qui a pour effet de permettre l'enroulement du dispositif selon une forme de rouleau. Le roulement/déroulement peut s'effectuer soit de façon progressive et contrôlée à l'aide d'un moteur, soit en laissant les ressorts s'enrouler sans entrave. Les points d'accrochage fixes de ce dispositif escamotable peuvent être situés sur le bas des faces Nord et Sud pour un mouvement selon la direction longitudinale L, ou bien sur le côté inférieur des faces Nord et Sud pour un mouvement selon la direction transversale T.

Le dispositif d'isolation non représenté est principalement utilisé lors de la phase de transfert de l'orbite d'injection vers l'orbite géostationnaire, mais peut également être utilisé une fois l'engin spatial à poste. Lorsque les générateurs solaires sont repliés (au lancement), le dispositif d'isolation thermique est disposé contre la face Nord 18 ou contre la face Sud 16. Le dispositif d'isolation thermique est escamoté lorsqu'il n'est pas utilisé.

En référence à la figure 8, l'engin spatial 2 comporte en outre un panneau d'isolation thermique 92 et un moteur 94 apte à entrainer en rotation le panneau d'isolation thermique 92.

Le panneau d'isolation thermique 92 est articulé le long d'un axe qui s'étend entre la face Nord 18 et la face anti-terre 6 ou entre la face Sud 16 et la face anti-terre 6. Le panneau d'isolation thermique 92 comprend une structure rigide 96 ou un cadre rigide réalisé en aluminium ou en polymères renforcés en fibres de carbone (en anglais « Carbon Fiber reinforced Polymer » ou CFRP) et une feuille isolante 98 par exemple réalisée en Kapton recouvrant cette structure 96.Le panneau d'isolation thermique 92 est déployable entre une position dans laquelle le panneau d'isolation thermique est disposé contre la face Nord 18 ou contre la face Sud 16, et une position dans laquelle le panneau d'isolation thermique 92 est disposé contre la face anti-terre 6.

Tout comme le dispositif d'isolation non représenté, le panneau d'isolation thermique 92 est principalement utilisé lors de la phase de transfert de l'orbite d'injection vers l'orbite géostationnaire, mais peut également être utilisé une fois le satellite à poste. Lorsque les générateurs solaires sont repliés (au lancement) le panneau d'isolation thermique 92 est disposé contre la face Nord 18 ou contre la face Sud 16. Le panneau d'isolation thermique 92 est escamoté lorsqu'il n'est pas utilisé. Ce panneau d'isolation thermique 92 est utilisé lors de la phase de transfert de l'orbite d'injection vers l'orbite géostationnaire. Ensuite, le panneau d'isolation thermique 92 est fixé sur la face anti-Terre 92.

Ce panneau d'isolation thermique 92 peut être utilisé avec l'ensemble des modes de réalisation du dispositif d'isolation décrit ci-dessus.

Le dispositif selon l'invention trouve une utilisation particulièrement avantageuse pour protéger les radiateurs des satellites contre le froid, de façon variable et sans avoir besoin de surdimensionner le budget de puissance de réchauffage interne. Ceci est particulièrement important lorsqu'on souhaite minimiser le budget puissance nécessaire au réchauffage et ainsi utiliser cette puissance pour d'autres fonctions de la mission. On peut citer par exemple des satellites à puissance limitée ou pour une utilisation pendant la phase de transfert en propulsion électrique. Un autre avantage de l'invention est de pouvoir réduire les variations de température au sein du satellite. On peut ainsi simplifier les équipements de la charge utile en utilisant des équipements qui supportent une plage de température plus faible et qui sont moins onéreux.

Le dispositif d'isolation thermique selon l'invention permet une protection thermique variable à la demande, à n'importe quel moment de la mission, indépendamment des contraintes des autres appendices du satellite. Ce dispositif est donc compatible de toutes les positions des panneaux solaires, qu'ils soient repliés, partiellement dépliés ou complètement dépliés. En outre, ce dispositif ne contraint pas les opérations du satellite pour l'orientation des antennes ou l'utilisation de la propulsion. Il permet ainsi de faciliter grandement la tâche des opérateurs lors des opérations en orbite. La variabilité de la protection thermique offerte permet de gérer des situations non anticipées et qui nécessitent ponctuellement ou durablement plus de puissance de réchauffage. On peut citer par exemple des situations de panne ou de sous-utilisation du satellite ou d'une partie de la charge utile.

Le dispositif d'isolation thermique décrit est simple à mettre en oeuvre, ce qui rend cette solution robuste, fiable et peu onéreuse à développer et à installer. En outre, ce dispositif est rapide à développer et léger à embarquer. En effet, il ne nécessite pas d'interconnexion thermique avec le reste du satellite, mais juste un branchement électrique pour faire fonctionner le moteur. Il peut donc être installé sur le satellite très tardivement au cours d'un programme.

Enfin, le dispositif selon l'invention maximise la surface de protection offerte tout en étant générique. Il peut ainsi être utilisable à l'identique sur les 2 murs Nord et Sud, indépendamment des contraintes d'accommodation, ce qui permet de réduire le coût de la solution complète pour un satellite.

## Revendications

1. Engin spatial (2) comprenant une caisse (4) ayant au moins une face (6, 16, 18), au moins un radiateur (22) porté par ladite face (6, 16, 18) et au moins un dispositif d'isolation thermique (28) propre à isoler thermiquement la caisse (4) de l'espace ;
ledit dispositif d'isolation thermique (28) comprenant au moins une feuille souple (32, 34) isolante déplaçable entre une position dépliée dans laquelle la feuille souple (32, 34) recouvre une zone recouvrable (36) du radiateur, et une position pliée sur elle-même dans laquelle ladite zone recouvrable (36) du radiateur est exposée vers l'espace,
**caractérisé en ce que** la feuille souple (32, 34) comporte plusieurs plis (43) qui s'étendent perpendiculairement à la direction de déplacement de la feuille souple (32, 34), lesdits plis (43) étant rabattus les uns contre les autres lorsque la feuille souple (32, 34) est en position pliée, lesdits plis (43) étant écartés les uns des autres lorsque la feuille souple (32, 34) est dans une position dépliée.

2. Engin spatial (2,) selon la revendication 1, dans lequel le radiateur (22) présente des bords longitudinaux (26), et dans lequel la feuille souple (32, 34) est centrée par rapport aux bords longitudinaux (26) du radiateur (22), lorsque la feuille souple (32, 34) est en position pliée.

3. Engin spatial (2) selon l'une quelconque des revendications précédentes, qui comporte des panneaux solaires (20) et dans lequel ladite zone recouvrable (36) comprend une zone du radiateur non recouverte par les panneaux solaires (20), lorsque les panneaux solaires (20) sont en position repliée.

4. Engin spatial (2) selon l'une quelconque des revendications 1 à 3 le radiateur (22) comportant une face principale externe (24), et dans lequel le dispositif d'isolation thermique (28) comprend :
- une première feuille souple (32) et une deuxième feuille souple (34) ayant chacune un bord fixe (38) maintenu fixe par rapport au radiateur (22) et un bord opposé, dit bord latéral (40),
- un unique câble d'entrainement (50) propre à entrainer en déplacement simultanément le bord latéral (40) de la première feuille souple (32) et le bord latéral (40) de la deuxième feuille souple (34), ledit câble d'entrainement (50) s'étendant au moins deux fois au droit de la face principale externe (24) du radiateur selon une direction perpendiculaire aux bords latéraux (40) des feuilles souples, ledit câble d'entraînement (50) étant fixé en au moins un point de fixation (56, 63) du bord latéral de la première feuille souple (32) et en au moins un point de fixation (58, 65) du bord latéral de la deuxième feuille souple (34),
- au moins quatre galets de guidage (41, 45, 47, 49, 51, 53, 55) propres à guider ledit câble d'entrainement (50), et
- un unique moteur (48) propre à entrainer le câble d'entrainement (50).

5. Engin spatial (2) selon la revendication 4, dans lequel le câble d'entrainement (50) s'étend quatre fois au droit de la face principale externe (24) du radiateur selon une direction perpendiculaire aux bords latéraux (40) des feuilles souples, ledit câble d'entraînement (50) étant fixé en deux points de fixation (56, 63) du bord latéral (40) de la première feuille souple (32) et en au moins deux points de fixation (58, 65) du bord latéral (40) de la deuxième feuille souple (34), et dans lequel le dispositif d'isolation thermique (28) comprend sept galets de guidage (41, 45, 47, 49, 51, 53, 55).

6. Engin spatial (2) selon l'une quelconque des revendications 4 et 5, dans lequel le dispositif d'isolation thermique (28) comporte un dispositif (62) apte à mettre sous tension le câble d'entrainement (50).

7. Engin spatial (67,83) selon l'une quelconque des revendications 1 à 6, dans lequel le dispositif d'isolation thermique (28) comporte en outre une première tige d'entrainement (42) fixée à un bord latéral (40) de la première feuille souple et une deuxième tige d'entrainement (44) fixée à un bord latéral (40) de la deuxième feuille souple, le ou lesdits câble(s) d'entraînement étant fixé(s) à la première tige d'entrainement (42) et à la deuxième tige d'entrainement (44).

8. Engin spatial (2) selon la revendication 7, dans lequel le dispositif d'isolation thermique (28) comporte en outre :
- au moins un élément élastique (64) propre à rapprocher la première tige d'entrainement (42) et la deuxième tige d'entraînement (44), et
- un dispositif de déblocage (66) propre à sectionner le câble d'entrainement (50) en cas de blocage du dispositif d'isolation thermique.

9. Engin spatial (2) selon l'une quelconque des revendications précédentes, dans lequel le dispositif d'isolation thermique (28) comprend un cache (30) propre à protéger la feuille souple (32, 34), lorsque la feuille souple (32, 34) est en position pliée.

10. Engin spatial (2) selon l'une quelconque des revendications précédentes, dans lequel ladite au moins une face comprend une face Nord (18), une face Sud (16) et une face anti-Terre (6) et qui comprend un panneau d'isolation thermique (92) déployable entre une position dans laquelle le panneau d'isolation thermique (92) est disposé contre la face Nord (18) ou contre la face Sud (16), et une position dans laquelle le panneau d'isolation thermique (92) est disposé contre la face anti-Terre (6)

11. Engin spatial (2) selon la revendication 10, dans lequel le panneau d'isolation thermique (92) comporte une structure rigide (96) sur laquelle une feuille isolante (98) est fixée.

12. Utilisation d'un engin spatial (2) selon l'une quelconque des revendications 1 à 11, au cours de laquelle le dispositif d'isolation thermique (28) est plié ou déplié une fois que l'engin spatial est en orbite géostationnaire en fonction des variations thermiques induites par les saisons ou induites par l'utilisation de la charge utile.

## Patentansprüche

1. Raumfahrzeug (2), umfassend ein Gehäuse (4), welches wenigstens eine Fläche (6, 16, 18), wenigstens einen von der Fläche (6, 16, 18) getragenen Radiator (22) und wenigstens eine Einrichtung zur thermischen Isolation (28) aufweist, welche dazu geeignet ist, das Gehäuse (4) vom Raum thermisch zu isolieren;
wobei die Einrichtung zur thermischen Isolation (28) wenigstens eine isolierende biegsame Bahn (32, 34) umfasst, welche zwischen einer ausgefahrenen Position, in welcher die biegsame Bahn (32, 34) eine abdeckbare Zone (36) des Radiators abdeckt, und einer auf sich selbst gefalteten Position verlagerbar ist, in welcher die abdeckbare Zone (36) des Radiators zum Raum freigelegt ist, **dadurch gekennzeichnet, dass** die biegsame Bahn (32, 34) mehrere Lagen (43) umfasst, welche sich senkrecht zu der Richtung der Verlagerung der biegsamen Bahn (32, 34) erstrecken, wobei die Lagen (43) gegeneinander abgeklappt sind, wenn die biegsame Bahn (32, 34) in gefalteter Position ist, wobei die Lagen (43) voneinander entfernt sind, wenn die biegsame Bahn (32, 34) in einer ausgefalteten Position ist.

2. Raumfahrzeug (2) nach Anspruch 1, wobei der Radiator (22) longitudinale Ränder (26) aufweist, und wobei die biegsame Bahn (32, 34) bezüglich der longitudinalen Ränder (26) des Radiators (22) zentriert ist, wenn die biegsame Bahn (32, 34) in gefalteter Position ist.

3. Raumfahrzeug (2) nach einem der vorhergehenden Ansprüche, welches Solarpaneele (20) umfasst, und wobei die abdeckbare Zone (36) eine Zone des Radiators umfasst, welche nicht durch die Solarpaneele (20) abgedeckt ist, wenn die Solarpaneele in zurückgefalteter Position sind.

4. Raumfahrzeug (2) nach einem der Ansprüche 1 bis 3, wobei der Radiator (22) eine externe Hauptfläche (24) umfasst, und wobei die Einrichtung zur thermischen Isolation (28) umfasst:
- eine erste biegsame Bahn (32) und eine zweite biegsame Bahn (34), welche jeweils einen festen Rand (38) aufweisen, welcher bezüglich des Radiators (22) festgehalten ist, sowie einen gegenüberliegenden Rand, genannt lateraler Rand (40),
- ein einzelnes Antriebskabel (50), welches geeignet ist, den lateralen Rand (40) der ersten biegsamen Bahn (32) und den lateralen Rand (40) der zweiten biegsamen Bahn (34) zur gleichzeitigen Verlagerung anzutreiben, wobei sich das Antriebskabel (50) wenigstens zweimal unter der externen Hauptfläche (24) des Radiators entlang einer Richtung senkrecht zu den lateralen Rändern (40) der biegsamen Bahnen erstreckt, wobei das Antriebskabel (50) an wenigstens einem Befestigungspunkt (56, 63) des lateralen Rands der ersten biegsamen Bahn (32) und an wenigstens einem Befestigungspunkt (58, 65) des lateralen Rands der zweiten biegsamen Bahn (34) befestigt ist,
- wenigstens vier Führungsrollen (41, 45, 47, 49, 51, 53, 55), welche dazu geeignet sind, das Antriebskabel (50) zu führen, und
- einen einzelnen Motor (48), welcher dazu geeignet ist, das Antriebskabel (50) anzutreiben.

5. Raumfahrzeug (2) nach Anspruch 4, wobei sich das Antriebskabel (50) viermal unterhalb der externen Hauptfläche (24) des Radiators entlang einer Richtung senkrecht zu den lateralen Rändern (40) der biegsamen Bahnen erstreckt, wobei das Antriebskabel (50) an zwei Befestigungspunkten (56, 63) des lateralen Rands (40) der ersten biegsamen Bahn (32) und an wenigstens zwei Befestigungspunkten (58, 65) des lateralen Rands (40) der zweiten biegsamen Bahn (34) befestigt ist, und wobei die Einrichtung zur thermischen Isolation (28) sieben Führungsrollen (41, 45, 47, 49, 51, 53, 55) umfasst.

6. Raumfahrzeug (2) nach einem der Ansprüche 4 und 5, wobei die Einrichtung zur thermischen Isolation (28) eine Einrichtung (62) umfasst, welche in der Lage ist, das Antriebskabel (50) unter Spannung zu setzen.

7. Raumfahrzeug (67, 83) nach einem der Ansprüche 1 bis 6, wobei die Einrichtung zur thermischen Isolation (28) ferner eine erste Antriebsstange (42), welche an einem lateralen Rand (40) der ersten biegsamen Bahn befestigt ist, und eine zweite Antriebsstange (44) umfasst, welche an einem lateralen Rand (40) der zweiten biegsamen Bahn befestigt ist, wobei das oder die Antriebskabel an der ersten Antriebsstange (42) und an der zweiten Antriebsstange (44) befestigt ist/sind.

8. Raumfahrzeug (2) nach Anspruch 7, wobei die Einrichtung zur thermischen Isolation (28) ferner umfasst:
- wenigstens ein elastisches Element (64), welches dazu geeignet ist, die erste Antriebsstange (42) und die zweite Antriebsstange (44) aneinander anzunähern, und
- eine Entriegelungsvorrichtung (66), welche dazu eingerichtet ist, das Antriebskabel (50) im Fall eines Blockierens der Einrichtung zur thermischen Isolation zu durchtrennen.

9. Raumfahrzeug (2) nach einem der vorhergehenden Ansprüche, wobei die Einrichtung zur thermischen Isolation (28) eine Abdeckung (30) umfasst, welche dazu geeignet ist, die biegsame Bahn (32, 34) zu schützen, wenn die biegsame Bahn (32, 34) in gefalteter Position ist.

10. Raumfahrzeug (2) nach einem der vorhergehenden Ansprüche, wobei die wenigstens eine Fläche eine Nordfläche (18), eine Südfläche (16) und eine erdabgewandte Fläche (6) umfasst, und welches ein Paneel zur thermischen Isolation (92) umfasst, welches zwischen einer Position, in welcher das Paneel zur thermischen Isolation (92) gegen die Nordfläche (18) oder gegen die Südfläche (16) angeordnet ist, und einer Position verlagerbar ist, in welcher das Paneel zur thermischen Isolation (92) gegen die erdabgewandte Fläche (6) angeordnet ist.

11. Raumfahrzeug (2) nach Anspruch 10, wobei das Paneel zur thermischen Isolation (92) eine steife Struktur (96) umfasst, an welcher eine isolierende Bahn (98) befestigt ist.

12. Verwendung eines Raumfahrzeugs (2) nach einem der Ansprüche 1 bis 11 ,in deren Verlauf die Vorrichtung zur thermischen Isolation (28) gefaltet oder ausgefaltet wird, sobald das Raumfahrzeug in geostationärem Orbit ist, als Funktion von thermischen Variationen, welche durch die Jahreszeiten hervorgerufen werden oder durch die Verwendung der Nutzlast hervorgerufen werden.

## Claims

1. Spacecraft (2) comprising a body (4) having at least one face (6, 16, 18), at least one radiator (22) carried by said face (6, 16, 18), and at least one thermal insulation device (28) capable of thermally insulating the body (4) from the space environment;
said thermal insulation device (28) comprising at least one flexible insulating sheet (32, 34) that is movable between an unfolded position in which the flexible sheet (32, 34) covers a coverable area (36) of the radiator, and a position folded on itself in which said coverable area (36) of the radiator is exposed to the space environment,
**characterized in that** the flexible sheet (32, 34) comprises multiple pleats (43) which extend perpendicularly to the direction of movement of the flexible sheet (32, 34), said pleats (43) being folded against one another when the flexible sheet (32, 34) is in the folded position, said pleats (43) being spaced apart from one another when the flexible sheet (32, 34) is in an unfolded position.

2. Spacecraft (2) according to claim 1, wherein the radiator (22) has longitudinal edges (26), and wherein the flexible sheet (32, 34) is centered with respect to the longitudinal edges (26) of the radiator (22) when the flexible sheet (32, 34) is in the folded position.

3. Spacecraft (2) according to any one of the preceding claims, comprising solar panels (20), and wherein said coverable area (36) comprises an area of the radiator that is not covered by the solar panels (20) when the solar panels (20) are in the folded position.

4. Spacecraft (2) according to any one of claims 1 to 3, the radiator (22) having an external main face (24), and wherein the thermal insulation device (28) comprises:
- a first flexible sheet (32) and a second flexible sheet (34) each having a fixed edge (38) held stationary relative to the radiator (22), and an opposite edge referred to as the lateral edge (40),
- a single drive cable (50) able to drive the lateral edge (40) of the first flexible sheet (32) and the lateral edge (40) of the second flexible sheet (34) simultaneously, said drive cable (50) extending at least two times to the right of the external main face (24) of the radiator in a direction perpendicular to the lateral edges (40) of the flexible sheets, said drive cable (50) being fixed at at least one point of attachment (56, 63) of the lateral edge of the first flexible sheet (32) and at at least one point of attachment (58, 65) of the lateral edge of the second flexible sheet (34),
- at least four guide rollers (41, 45, 47, 49, 51, 53, 55) suitable for guiding said drive cable (50), and
- a single motor (48) suitable for driving the drive cable (50).

5. Spacecraft (2) according to claim 4, wherein the drive cable (50) extends four times to the right of the external main face (24) of the radiator in a direction perpendicular to the lateral edges (40) of the flexible sheets, said drive cable (50) being fixed at two points of attachment (56, 63) of the lateral edge (40) of the first flexible sheet (32) and at at least two points of attachment (58, 65) of the lateral edge (40) of the second flexible sheet (34), and wherein the thermal insulation device (28) comprises seven guide rollers (41, 45, 47, 49, 51, 53, 55).

6. Spacecraft (2) according to any one of claims 4 and 5, wherein the thermal insulation device (28) comprises a device (62) able to apply tension to the drive cable (50).

7. Spacecraft (67,83) according to any one of claims 1 to 6, wherein the thermal insulation device (28) further comprises a first drive rod (42) fixed to a lateral edge (40) of the first flexible sheet and a second drive rod (44) fixed to a lateral edge (40) of the second flexible sheet, said one or more drive cable(s) being fixed to the first rod drive (42) and to the second drive rod (44).

8. Spacecraft (2) according to claim 7, wherein the thermal insulation device (28) further comprises:
- at least one elastic member (64) able to bring the first drive rod (42) and the second drive rod (44) closer together, and
- a release device (66) able to sever the drive cable (50) in the event of the thermal insulation device becoming jammed.

9. Spacecraft (2) according to any preceding claim, wherein the thermal insulation device (28) comprises a cover (30) able to protect the flexible sheet (32, 34) when the flexible sheet (32, 34) is in the folded position.

10. Spacecraft (2) according to any preceding claim, wherein said at least one face comprises a north face (18), a south face (16), and an anti-Earth face (6), and comprises a thermal insulation panel (92) deployable between a position in which the thermal insulation panel (92) is arranged against the north face (18) or against the south face (16), and a position in which the thermal insulation panel (92) is arranged against the zenith face (6).

11. Spacecraft (2) according to claim 10, wherein the thermal insulation panel (92) comprises a rigid structure (96) on which an insulating sheet (98) is fixed.

12. Use of a spacecraft (2) according to any one of claims 1-11, during which the thermal insulation device (28) is folded or unfolded, once the spacecraft is in geostationary orbit, according to the thermal variations induced by the seasons or induced by the use of the payload.
